# EUROPEAN PATENT APPLICATION

(11) **EP 4 709 053 A1**
(43) Date of publication of application: **11.03.2026**
(21) Application number: 25201267.9
(22) Date of filing: 09.09.2025
(51) Int. Cl.: H05B 45/10, H05B 47/115, H05B 47/19, H05B 47/175

(54) **LIGHTING SYSTEM WITH STEPWISE LIGHTING FUNCTION AND CONTROL METHOD THEREOF**

(30) Priority: 10.09.2024 CN 202411262781
(71) Applicant: Xiamen Pvtech Corporation Limited, Xiamen, Fujian 361101 (CN)
(72) Inventor: Xu, Chengquan, Xiamen (CN); Lin, Zhirong, Xiamen (CN); Lu, Fuxing, Xiamen (CN)
(74) Representative: Finnegan Europe LLP

(57) **Abstract**

A lighting system includes multiple lighting devices (11) distributed within a preset area and communicating with each other. Each one of the lighting devices is configured to, upon detecting a moving object (HR), continuously generate a detection signal (Ds) and enter a master mode. When a first one of the lighting devices enters the master mode, the first lighting device functions as a master lighting device (LA) and remaining one or more of the lighting devices function as one or more controlled lighting devices (LB). The master lighting device is configured to emit light and broadcast a control signal (Cs), and each controlled lighting device is configured to emit light based on a signal strength of the control signal being received by the respective controlled lighting device.

## Description

### CROSS-REFERENCE TO RELATED APPLICATIONS

The present application claims priority to and the benefits of Chinese Patent Application No. 202411262781.1, filed on September 10, 2024, which is incorporated herein by reference in its entirety.

### TECHNICAL FIELD

Embodiments of the present disclosure relate to a lighting system, and in particular to a lighting system with stepwise lighting function. The embodiments of the present disclosure also relate to a control method of the lighting system.

### BACKGROUND

Due to technological advancements, intelligent lighting systems have increasing wide applications. However, existing intelligent lighting systems still have many shortcomings that require improvement.

For example, the installation of existing intelligent lighting systems requires complex network installation and configuration procedures, which significantly increases the installation cost of intelligent lighting systems. Additionally, existing intelligent lighting systems require intermediary devices for signal transmission. Therefore, when there are a large number of lighting devices (e.g., wireless communication nodes), it may easily cause excessive network traffic, resulting in the intelligent lighting system's failure to operate normally. Furthermore, lighting devices need to run complex protocol codes, which not only increases software costs but also raises hardware costs, significantly elevating both the manufacturing costs and maintenance costs of the lighting devices.

### SUMMARY

In some embodiments of the present disclosure, a lighting system includes multiple lighting devices distributed within a preset area and communicating with each other. Each one of the lighting devices is configured to, upon detecting a moving object, continuously generate a detection signal and enter a master mode. When a first one of the lighting devices enters the master mode, the first lighting device functions as a master lighting device and remaining one or more of the lighting devices function as one or more controlled lighting devices. The master lighting device is configured to emit light and broadcast a control signal, and each controlled lighting device is configured to emit light based on a signal strength of the control signal being received by the respective controlled lighting device.

In some other embodiments of the present disclosure, a control method for a lighting system including lighting devices distributed within a preset area and communicating with each other is provided. The control method includes following steps: controlling a first one of the lighting devices to, upon detecting a moving object, continuously generate a detection signal and enter a master mode to function as a master lighting device, wherein remaining one or more of the lighting devices function as one or more controlled lighting devices; controlling the master lighting device to emit light and broadcast a control signal; and controlling each controlled lighting device to emit light based on a signal strength of the control signal being received by the respective controlled lighting device.

### BRIEF DESCRIPTION OF THE DRAWINGS

FIG. 1 is a block diagram of a lighting system with stepwise lighting function according to some embodiments of the present disclosure.
FIG. 2 is a first schematic diagram illustrating the operating state of the lighting system with stepwise lighting function, according to some embodiments of the present disclosure.
FIG. 3 is a second schematic diagram illustrating the operating state of the lighting system with stepwise lighting function, according to some embodiments of the present disclosure.
FIG. 4 is a block diagram of a lighting device in the lighting system with stepwise lighting function, according to some embodiments of the present disclosure.
FIG. 5 is a block diagram of a lighting system with stepwise lighting function according to some embodiments of the present disclosure.
FIG. 6 is a flowchart of a control method for a lighting system with stepwise lighting function, according to some embodiments of the present disclosure.
FIG. 7 is a flowchart of a control method for a lighting system with stepwise lighting function, according to some embodiments of the present disclosure.

The detailed features and advantages of the present disclosure are elaborated in the following embodiments, which are sufficient to enable a person skilled in the art to understand the technical content of the embodiments of the present disclosure and implement it accordingly. Based on the content disclosed in the specification, the claims, and the drawings, a person skilled in the art can readily comprehend the objectives and advantages associated with the present disclosure.

### DETAILED DESCRIPTION

The following will refer to the accompanying drawings to illustrate embodiments of the lighting system with stepwise lighting function and control method thereof according to the embodiments of the present disclosure. For clarity and convenience in illustrating the drawings, the dimensions and proportion of each component in the drawings may be exaggerated or reduced. In the following description and/or claims, when a component is described as being "connected" or "coupled" to a second component, it may be directly connected or coupled to the second component or intervening components may be present. When a component is described as being "directly connected" or "directly coupled" to a second component, there are no intervening components. Other terms used to describe the relationship between components or layers shall be interpreted in a similar manner. For ease of understanding, identical components in the following embodiments are labeled with the same symbols for illustration.

According to the embodiments of the present disclosure, the lighting system with stepwise lighting function and control method thereof may have one or more of the following advantages.

First, in some embodiments of the present disclosure, the lighting system includes a plurality of lighting devices. The plurality of lighting devices are distributed within a preset area and communicating with each other. Any one of the lighting devices, upon detecting a moving object (e.g., person, vehicle, etc.), continuously generates a detection signal and enters a master mode. The lighting device enters the master mode to function as a master lighting device, while the other lighting devices function as controlled lighting devices. The master lighting device emits light and broadcasts a control signal, while each of the controlled lighting devices emits light based on the signal strength of the received control signal. The brightness of the master lighting device is greater than that of any of the controlled lighting devices. Since different controlled lighting devices are at varying distances from the master lighting device, the signal strength of the received control signal also differs. Consequently, a lighting area with maximum central brightness can be formed, where the center point of this lighting area represents the master lighting device, thereby achieving a stepwise lighting effect. The aforementioned stepwise lighting effect provides excellent visual effect, offering optimal illumination for the moving object.

Second, in some embodiments of the present disclosure, the stepwise lighting function of the lighting system can be realized through a master mode-based mechanism. That is, any one of the lighting devices, upon detecting a moving object (e.g., a person, vehicle, etc.), continuously generates a detection signal and enters a master mode to function as a master lighting device, while the other lighting devices function as controlled lighting devices. Then, the master lighting device emits light and broadcasts a control signal, while each of the controlled lighting devices emits light based on the signal strength of the received control signal. Thus, the lighting system requires no complex network installation or configuration procedures. Therefore, the installation cost of the lighting system can be significantly reduced to meet practical application requirements.

Third, in some embodiments of the present disclosure, the stepwise lighting function of the lighting system can be realized through a master mode-based mechanism, and the master mode-based mechanism requires no intermediary device. Consequently, the lighting system will not fail to operate normally under excessive network traffic. As a result, the stability of the lighting system can be greatly enhanced while meeting the requirements of different applications.

Fourth, in some embodiments of the present disclosure, the stepwise lighting function of the lighting system can be realized through a master mode-based mechanism, requiring no complex protocol code. Thus, the aforementioned control mechanism not only reduces the software costs of the lighting system but also lowers its hardware costs. Therefore, both the manufacturing costs and maintenance costs of the lighting system can be significantly reduced.

Fifth, in some embodiments of the present disclosure, the lighting system can be applied to varying intelligent systems to meet the requirements of different applications, while achieving excellent technical effect. Thus, the lighting system not only delivers high efficiency but also aligns with future development trends.

Sixth, in some embodiments of the present disclosure, the lighting system has simple design, enabling it to achieve the desired functionality while reducing costs, thereby significantly enhancing its practicality. Consequently, the lighting system may offer broader applications and more flexible usage.

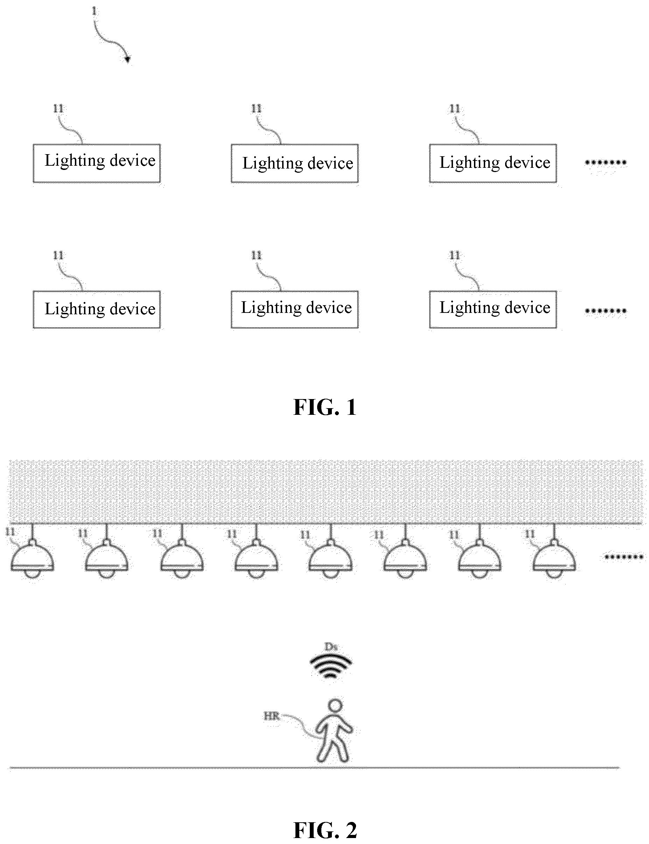

Reference is made to FIG. 1, which is a block diagram of a lighting system with stepwise lighting function according to some embodiments of the present disclosure. As shown in the figure, the lighting system 1 includes multiple lighting devices 11 (only four lighting devices 11 are illustrated in the figure; and the number of lighting devices 11 may be adjusted according to actual needs). The aforementioned lighting devices 11 are distributed within a preset area (e.g., a garage, a parking lot, an office building, etc.) and can wirelessly communicate with each other.

Of course, the embodiments of FIG. 1 are provided for illustrative purposes only and are not intended to limit the scope of the present disclosure. Equivalent modifications or variations based on the lighting system with stepwise lighting function according to the above embodiments shall still fall within the claim scope of the present disclosure.

Reference is made to FIG. 2, which is the first schematic diagram illustrating the operating state of the lighting system with stepwise lighting function according to some embodiments of the present disclosure. As shown in the figure, each lighting device 11 offers a moving object detection function. When a moving object HR enters the preset area and any lighting device 11 detects the moving object HR, this lighting device 11 emits light and continuously generates a detection signal Ds. Simultaneously, this lighting device 11 enters the master mode.

Of course, the embodiments of FIG. 2 are provided for illustrative purposes only and are not intended to limit the scope of the present disclosure. Equivalent modifications or variations based on the lighting system with stepwise lighting function according to the above embodiments shall still fall within the claim scope of the present disclosure.

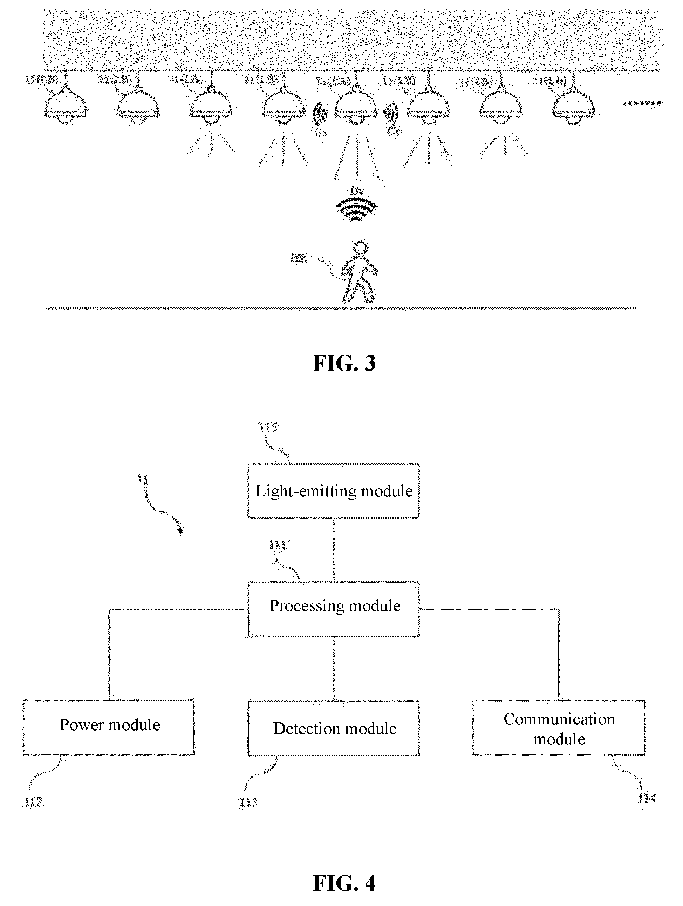

Reference is made to FIG. 3, which is the second schematic diagram illustrating the operating state of the lighting system with stepwise lighting function according to some embodiments of the present disclosure. As shown in the figure, when this lighting device 11 enters the master mode, it functions as the master lighting device LA and broadcasts the control signal Cs, while other lighting devices 11 serve as controlled lighting devices LB. Subsequently, the control signal Cs is received by the other controlled lighting devices LB.

Since the signal strength of the control signal Cs attenuates during transmission, a controlled lighting device LB located closer to the master lighting device LA receives the control signal Cs with a greater signal strength. On the other hand, a controlled lighting device LB located farther from the master lighting device LA receives the control signal Cs with a less signal strength. Each controlled lighting device LB converts the signal strength of the control signal Cs being received into a light intensity value and emits light based on the light intensity value. For example, each controlled lighting device LB may normalize the received signal strength of the control signal Cs to obtain a signal strength reference value and compare this reference value with a preset light intensity value table to identify the corresponding light intensity value. Subsequently, the controlled lighting device LB emits light based on this light intensity value. If a controlled lighting device LB converts the received signal strength of the control signal Cs into a light intensity value, which, however, is below the preset lower limit, the controlled lighting device LB will not emit light. The brightness of the master lighting device LA will be greater than the brightness of any of the controlled lighting devices LB. The initial signal strength of the control signal Cs can also be adjusted according to actual requirements to achieve the desired range of the lighting area.

The master lighting device LA, upon failing to generate the detection signal Ds, initiates a timing procedure to measure a preset time interval, and exits the master mode and stops emitting light after the preset time interval. Similarly, each controlled lighting device LB, upon failing to receive the control signal Cs, initiates a timing procedure to measure a preset time interval, and stops emitting light after the preset time interval.

Similarly, when the moving object HR moves to another location and another lighting device 11 detects the moving object HR, this lighting device 11 emits light and continuously generates the detection signal Ds; simultaneously, this lighting device 11 enters the master mode and executes the aforementioned operational mode.

As mentioned above, since different controlled lighting devices LB are at varying distances from the master lighting device LA, the signal strength of the received control signal Cs also differs. Thus, a lighting area with the maximum central brightness can be formed, where the center point of such lighting area represents the master lighting device LA, thereby achieving a stepwise lighting effect. The aforementioned stepwise lighting effect can provide excellent visual effect, offering optimal illumination for the moving object HR.

Additionally, in the above embodiments, the stepwise lighting function of the lighting system 1 can be realized through a master mode-based mechanism. This master mode-based mechanism does not require intermediary devices or complex protocol codes. Consequently, the lighting system 1 will not fail to operate normally under excessive network traffic. As a result, the stability of the lighting system 1 can be greatly enhanced while meeting the requirements of different applications. Additionally, both the manufacturing cost and maintenance cost of the lighting system 1 can be significantly reduced.

Furthermore, in the above embodiments, the lighting system 1 can be applied to varying intelligent systems to meet the requirements of different applications, while achieving excellent technical effect. Therefore, the lighting system 1 not only delivers high efficiency but also aligns with future development trends.

Of course, the above embodiment are provided for illustrative purposes only and are not intended to limit the scope of the present disclosure. Equivalent modifications or variations based on the lighting system with stepwise lighting function according to the above embodiments shall still fall within the claim scope of the present disclosure.

Reference is made to FIG. 4, which is a block diagram of the lighting device of the lighting system with stepwise lighting function according to some embodiments of the present disclosure. As shown in the figure, each lighting device 11 may include a processing module 111, a power module 112, a detection module 113, a communication module 114, and a light-emitting module 115.

The power module 112, detection module 113, communication module 114, and light-emitting module 115 are connected to the processing module 111. In some embodiments, the processing module 111 may be a Microcontroller Unit (MCU). In some other embodiments, the processing module 111 may also be a Central Processing Unit (CPU), an Application-Specific Integrated Circuit (ASIC), a Field-Programmable Gate Array (FPGA), or other similar components. In some embodiments, the power module 112 may also be a power supply. In some other embodiments, the power module 112 may also be a battery or other similar power sources. In some embodiments, the detection module 113 may be a microwave sensor. In some other embodiments, the detection module 113 may also be a Passive Infrared (PIR) sensor or other similar components. In some embodiments, the communication module 114 may be a Bluetooth module. In some other embodiments, the communication module 114 may also be a WiFi module, ZigBee module, or other similar components. In some embodiments, the light-emitting module 115 may be a light-emitting diode (LED). In some other embodiments, the light-emitting module 115 may also be a light bulb, fluorescent tube, or other similar light sources.

The power module 112 can supply power to the processing module 111, the communication module 114, and the detection module 113.

The detection module 113 can detect a moving object HR and continuously generate a detection signal Ds upon detecting the moving object HR.

The processing module 111 can control the light-emitting module 115 to emit light and execute a master mode to broadcast a control signal Cs via the communication module 114. The processing module 111 can also receive the control signal Cs via the communication module 114, convert the signal strength of the received control signal Cs into a light intensity value, and control the light-emitting module 115 to emit light based on the light intensity value.

Of course, the above embodiments are provided for illustrative purposes only and are not intended to limit the scope of the present disclosure. Equivalent modifications or variations based on the lighting device 11 of the above embodiments shall still fall within the claim scope of the present disclosure.

It should be noted that the installation of existing intelligent lighting systems requires complex network installation and configuration procedures, which significantly increases the installation cost of the intelligent lighting systems. Additionally, existing intelligent lighting systems require intermediary devices for signal transmission. Therefore, when there are a large number of lighting devices 11 (e.g., wireless communication nodes), it may easily cause excessive network traffic, resulting in the intelligent lighting system's failure to operate normally. Furthermore, lighting devices 11 need to run complex protocol codes, which not only increases software costs but also raises hardware costs, significantly elevating both the manufacturing costs and maintenance costs of the lighting devices 11. In contrast, according to the embodiments of the present disclosure, the lighting system 1 includes multiple lighting devices 11. The lighting devices 11 are distributed within a preset area and communicating with each other. Any one of the lighting devices 11, upon detecting a moving object HR (e.g. person, vehicle, etc.), continuously generates a detection signal Ds and enters a master mode. The lighting device 11 enters the master mode to function as a master lighting device LA, while the other lighting devices 11 function as controlled lighting devices LB. The master lighting device LA emits light and broadcasts a control signal Cs, while each of the controlled lighting devices LB emits light based on the signal strength of the received control signal Cs. The brightness of the master lighting device LA will be greater than that of any of the controlled lighting devices LB. Since different controlled lighting devices LB are at varying distances from the master lighting device LA, the signal strength of the received control signal Cs also differs. Consequently, a lighting area with the maximum central brightness can be formed, where the center point of such lighting area represents the master lighting device LA, thereby achieving a stepwise lighting effect. The aforementioned stepwise lighting effect can provide excellent visual effect, offering optimal illumination for the moving object HR.

According to some embodiments of the present disclosure, the stepwise lighting function of the lighting system 1 can be realized through a master mode-based mechanism. That is, any one of the lighting devices 11, upon detecting a moving object HR (e.g., a person, vehicle, etc.), continuously generates a detection signal Ds and enters a master mode to function as a master lighting device LA, while the other lighting devices 11 function as controlled lighting devices LB. Then, the master lighting device LA emits light and broadcasts a control signal (Cs), while each of the controlled lighting devices LB emits light based on the signal strength of the received control signal Cs. Thus, the lighting system 1 requires no complex network installation or configuration procedures. Therefore, the installation cost of the lighting system 1 can be significantly reduced to meet practical application requirements.

Furthermore, according to the embodiments of the present disclosure, the stepwise lighting function of the lighting system 1 can be realized through a master mode-based mechanism. This master mode-based mechanism requires no intermediary device. Consequently, the lighting system 1 will not fail to operate normally under excessive network traffic. As a result, the stability of the lighting system 1 can be greatly enhanced while meeting the requirements of different applications.

Additionally, according to the embodiments of the present disclosure, the stepwise lighting function of the lighting system 1 can be realized through a master mode-based mechanism, requiring no complex protocol code. Thus, the aforementioned control mechanism can not only reduce the software costs of the lighting system 1 but also lower its hardware costs. Therefore, both the manufacturing cost and maintenance cost of the lighting system 1 can be significantly reduced.

Furthermore, according to the embodiments of the present disclosure, the lighting system 1 can be applied to varying intelligent systems to meet the requirements of different applications, while achieving excellent technical effect. Therefore, the lighting system 1 not only delivers high efficiency but also aligns with future development trends.

Moreover, according to the embodiments of the present disclosure, the lighting system 1 has simple design, enabling it to achieve the desired functionality while reducing costs, thereby significantly enhancing the practicality of the lighting system 1. Consequently, the lighting system 1 may offer broader applications and more flexible usage. As demonstrated above, the lighting system with stepwise lighting function according to the embodiments of the present disclosure indeed achieves excellent technical effect.

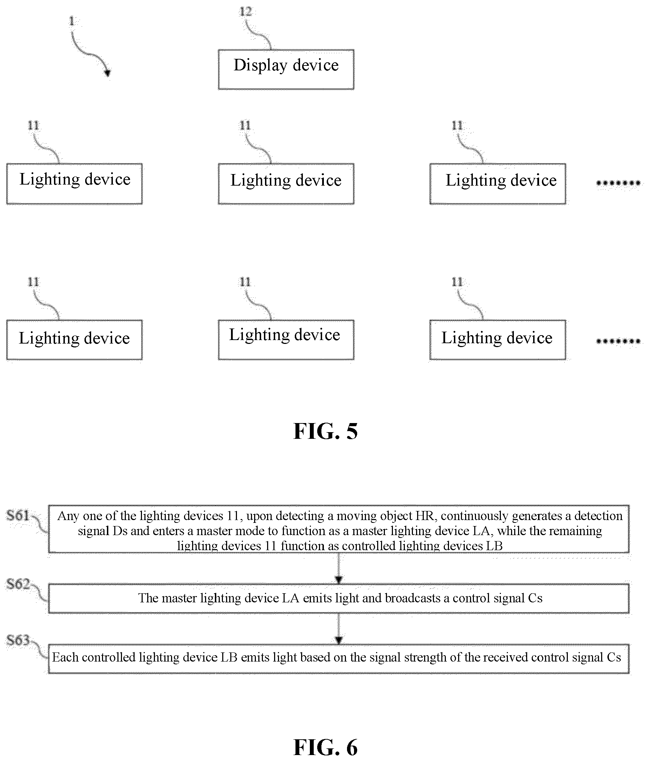

Reference is made to FIG. 5, which is a schematic diagram of a lighting system with stepwise lighting function, according to some embodiments of the present disclosure. As shown in the figure, the lighting system 1 includes multiple lighting devices 11 (only four lighting devices 11 are illustrated in the figure; and the number of lighting devices 11 may be adjusted according to actual needs). The aforementioned lighting devices 11 are distributed within a preset area (e.g., a garage, a parking lot, an office building, etc.) and can wirelessly communicate with each other.

Compared to the aforementioned embodiments, the lighting system 1 of the present embodiments further includes a display device 12. In some embodiments, the display device 12 may be a Liquid Crystal Display (LCD) Screen. In some other embodiments, the display device 12 may also be a laptop computer, personal computer, tablet computer, smartphone, or other similar devices. The display device 12 can wirelessly communicate with the aforementioned lighting devices 11 and can display the operating status and brightness level of the activated lighting devices 11. Additionally, the display device 12 can also show the positions of these lighting devices 11 and the location of the moving object HR. Thus, users can manage the lighting system 1 more conveniently.

Of course, the above embodiments are provided for illustrative purposes only and are not intended to limit the scope of the present disclosure. Equivalent modifications or variations based on the lighting system with stepwise lighting function according to the above embodiments shall still fall within the claim scope of the present disclosure.

Reference is made to FIG. 6, which is a flowchart of a control method for a lighting system with stepwise lighting function, according to some embodiments of the present disclosure. As shown in the figure, the control method of the present embodiments includes the following steps.

In step S61, upon detecting a moving object HR, any one of the lighting devices 11 continuously generates a detection signal Ds and enters a master mode to function as a master lighting device LA, while remaining lighting devices 11 function as controlled lighting devices LB.

In step S62, the master lighting device (LA) emits light and broadcasts a control signal Cs.

In step S63, each of the controlled lighting devices LB emits light based on the signal strength of the control signal Cs being received.

Of course, the present embodiments are provided for illustrative purposes only and are not intended to limit the scope of the disclosure. Equivalent modifications or variations based on the control method for the lighting system described in the present embodiments shall still fall within the claim scope of the present disclosure.

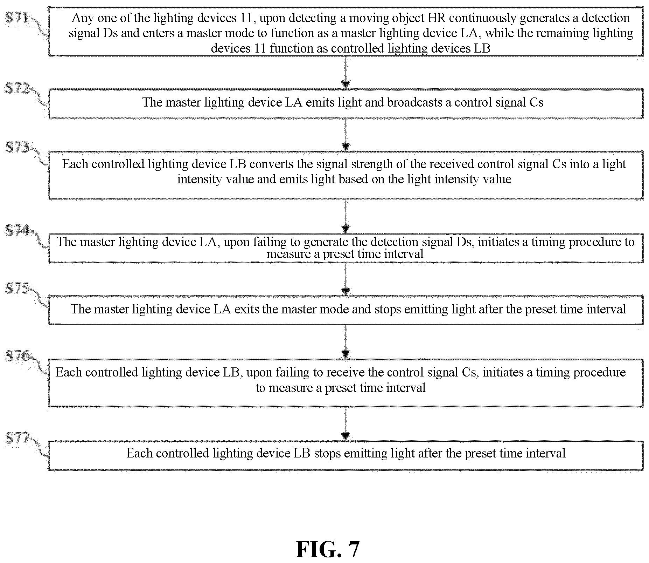

Reference is made to FIG. 7, which is a flowchart of a control method for a lighting system with stepwise lighting function, according to some embodiments of the present disclosure. As shown in the figure, the control method of the present embodiments includes the following steps.

In step S71, any one of the lighting devices 11, upon detecting a moving object HR, continuously generates a detection signal Ds and enters a master mode to function as a master lighting device LA, while the remaining lighting devices 11 function as controlled lighting devices LB.

In step S72, the master lighting device LA emits light and broadcasts a control signal Cs.

In step S73, each controlled lighting device LB converts the signal strength of the received control signal Cs into a light intensity value and emits light based on the light intensity value.

In step S74, the master lighting device LA, upon failing to generate the detection signal Ds, initiates a timing procedure to measure a preset time interval.

In step S75, the master lighting device LA exits the master mode and stops emitting light after the preset time interval.

In step S76, each of the controlled lighting devices LB, upon failing to receive the control signal Cs, initiates a timing procedure to measure a preset time interval.

In step S77, each of the controlled lighting devices LB stops emitting light after the preset time interval.

Of course, the present embodiments are provided for illustrative purposes only and are not intended to limit the scope of the disclosure. Equivalent modifications or variations based on the control method of the lighting system 1 described in the present embodiments shall still fall within the claim scope of the present disclosure.

Although the steps of the methods described in the present disclosure are shown and described in a specific order, the operation sequence for each method may be altered, certain steps may be executed in reverse order, or some steps may be performed simultaneously with others. In some other embodiments, different steps may be implemented intermittently and/or alternately.

In summary, according to the embodiments of the present disclosure, the lighting system 1 includes multiple lighting devices 11. The lighting devices 11 are distributed within a preset area and communicating with each other. Any one of the lighting devices 11, upon detecting a moving object HR (e.g., person, vehicle, etc.), continuously generates a detection signal Ds and enters a master mode. The lighting device 11 enters the master mode to function as a master lighting device LA, while the remaining lighting devices 11 function as controlled lighting devices LB. The master lighting device LA emits light and broadcasts a control signal Cs, while each of the controlled lighting devices LB emits light based on the signal strength of the received control signal Cs. The brightness of the master lighting device LA will be greater than the brightness of any of the controlled lighting devices LB. Since different controlled lighting devices LB are at varying distances from the master lighting device LA, the signal strength of the received control signal Cs also differs. Consequently, a lighting area with maximum central brightness can be formed, where the center point of such lighting area represents to the master lighting device LA, thereby achieving a stepwise lighting effect. The aforementioned stepwise lighting effect can provide excellent visual effect, offering optimal illumination for the moving object HR.

According to embodiments of the present disclosure, the stepwise lighting function of the lighting system 1 can be realized through a master mode-based mechanism. That is, any one of the lighting devices 11, upon detecting a moving object HR (e.g. a person, vehicle, etc.), continuously generates a detection signal Ds and enters a master mode to function as a master lighting device LA, while the remaining lighting devices function as controlled lighting devices LB. Then, the master lighting device LA emits light and broadcasts a control signal Cs, while each of the controlled lighting devices LB emits light based on the signal strength of the received control signal Cs. Thus, the lighting system 1 requires no complex network installation or configuration procedures. Therefore, the installation cost of the lighting system 1 can be significantly reduced to meet practical application requirements.

Furthermore, according to embodiments of the present disclosure, the stepwise lighting function of the lighting system 1 can be realized through a master mode-based mechanism. However, this master mode-based mechanism requires no intermediary device. Consequently, the lighting system 1 will not fail to operate normally under excessive network traffic. As a result, the stability of the lighting system 1 can be greatly enhanced while meeting the requirements of different applications.

Additionally, according to embodiments of the present disclosure, the stepwise lighting function of the lighting system 1 can be realized through a master mode-based mechanism, requiring no complex protocol code. Thus, the aforementioned control mechanism can not only reduce the software costs of the lighting system 1 but also lower its hardware costs. Therefore, both the manufacturing cost and maintenance cost of the lighting system 1 can be significantly reduced.

Furthermore, according to embodiments of the present disclosure, the lighting system 1 can be applied to varying intelligent systems to meet the requirements of different applications, while achieving excellent technical effect. Therefore, the lighting system 1 not only delivers high efficiency but also aligns with future development trends.

Moreover, according to embodiments of the present disclosure, the lighting system 1 has simple design, enabling it to achieve the desired functionality while reducing costs, thereby significantly enhancing the practicality of the lighting system 1. Consequently, the lighting system 1 may offer broader applications and more flexible usage.

It should be noted that although the aforementioned embodiments have been described herein, they do not limit the claim scope of the present disclosure. Therefore, based on the innovative concept of the present disclosure, any modifications and variations made to the embodiments described herein, or equivalent structural or equivalent process transformations utilizing the content of the description and drawings of the present disclosure, whether directly or indirectly applying the aforementioned technical solutions to other relevant technical fields, shall fall within the claim scope of the present disclosure.

## Claims

1. A lighting system (1), comprising:
a plurality of lighting devices (11) distributed within a preset area and communicating with each other;
wherein each one of the plurality of lighting devices is configured to, upon detecting a moving object (HR), continuously generate a detection signal (Ds) and enter a master mode;
wherein when a first one of the plurality of lighting devices enters the master mode, the first lighting device functions as a master lighting device (LA) and remaining one or more of the plurality of lighting devices function as one or more controlled lighting devices (LB), the master lighting device being configured to emit light and broadcast a control signal (Cs), and each controlled lighting device being configured to emit light based on a signal strength of the control signal being received by the respective controlled lighting device.

2. The lighting system with stepwise lighting function of claim 1, wherein a brightness of the master lighting device is greater than a brightness of any of the one or more controlled lighting devices.

3. The lighting system with stepwise lighting function of claim 1 or claim 2, wherein each controlled lighting device is configured to convert the signal strength of the control signal being received into a light intensity value and emit light based on the light intensity value.

4. The lighting system with stepwise lighting function of any of claims 1-3, wherein the master lighting device is configured to, upon failing to generate the detection signal, initiate a timing procedure to measure a preset time interval, and exit the master mode and stop emitting light after the preset time interval.

5. The lighting system with stepwise lighting function of any of claims 1-4, wherein each controlled lighting device is configured to, upon failing to receive the control signal, initiate a timing procedure to measure a preset time interval, and stop emitting light after the preset time interval.

6. A control method for a lighting system (1) comprising a plurality of lighting devices (11) distributed within a preset area and communicating with each other, the control method comprising:
controlling a first one of the plurality of lighting devices to, upon detecting a moving object (HR), continuously generate a detection signal (Ds) and enter a master mode to function as a master lighting device (LA), wherein remaining one or more of the plurality of lighting devices function as one or more controlled lighting devices (LB);
controlling the master lighting device to emit light and broadcast a control signal (Cs); and
controlling each controlled lighting device to emit light based on a signal strength of the control signal being received by the respective controlled lighting device.

7. The control method of claim 6, wherein a brightness of the master lighting device is greater than a brightness of any of the one or more controlled lighting devices.

8. The control method of claim 6 or claim 7, wherein operations of controlling each controlled lighting device to emit light based on the signal strength of the control signal being received further comprise:
controlling each controlled lighting device to convert the signal strength of the received control signal into a light intensity value and emit light based on the light intensity value.

9. The control method of any of claims 6-8, further comprising:
upon the master lighting device failing to generate the detection signal, controlling the master lighting device to:
initiate a timing procedure to measure a preset time interval; and
exit the master mode and stop emitting light after the preset time interval.

10. The control method of any of claims 6-9, further comprising:
controlling one of the one or more controlled lighting devices, upon failing to receive the control signal, to:
initiate a timing procedure to measure a preset time interval; and
stop emitting light after the preset time interval.
